# EUROPÄISCHE PATENTSCHRIFT

(11) **EP 1 488 985 B1**
(45) Veröffentlichungstag und Bekanntmachung des Hinweises auf die Patenterteilung: **22.08.2007**
(21) Anmeldenummer: 04009842.8
(22) Anmeldetag: 26.04.2004
(51) Int. Cl.: B62D 25/06

(54) **Fahrzeugdachmodul**
Vehicle roof module
Module de toit de véhicule

(30) Priorität: 20.06.2003 DE 10327839
(43) Veröffentlichungstag der Anmeldung: 22.12.2004
(73) Patentinhaber: ArvinMeritor GmbH, 63128 Dietzenbach (DE)
(72) Erfinder: Schönebeck, Horst, 63571 Gelnhausen (DE)
(74) Vertreter: Kitzhofer, Thomas

(56) Entgegenhaltungen:
- DE-A- 10 158 961
- DE-C- 19 531 514
- US-A- 4 852 422
- US-A1- 2003 159 264
- US-B1- 6 409 258
- US-B2- 6 513 864

## Beschreibung

Die Erfindung betrifft ein Fahrzeugdachmodul nach dem Oberbegriff des Anspruchs 1.

Moderne Fahrzeugdächer bestehen nicht aus einem an dem Dachrahmen angeschweißten oder einstückig mit ihm ausgebildeten Blechdach, sondern zunehmend aus einem Dachrahmen, an dem ein von einem Zulieferer hergestelltes Dachmodul durch Kleben und Schrauben bleibend und starr befestigt ist. Bleibend und starr befestigt soll nicht ausschließen, daß das Dachmodul zu Austauschzwecken in der Werkstatt vom Rahmen, gelöst werden kann, um durch ein neues Dachmodul ausgetauscht zu werden, das dann erneut bleibend und starr an dem Dachrahmen befestigt wird. Das Dachmodul besteht dabei üblicherweise aus Kunststoff, mit einer Außenhaut aus beispielsweise einer Aluminium- oder Kunststoffolie, die hinterschäumt ist. Solche Fahrzeugdachmodule können mit oder ohne Dachöffnungssystem ausgeführt sein. Bei den Dachöffnungssystemen wird von unten ein separater Rahmen, in dem die drucksteif geführten Kabel zum Öffnen und Schließen des Dachs untergebracht sind, mit der hinterschäumten Außenhaut verschraubt, was dazu führt, daß der Bauraum des gesamten Daches in vertikaler Richtung relativ groß ist. Darüber hinaus sollen zunehmend Anbauten an dem Fahrzeugdachmodul von der Innenseite her befestigt werden, was aufwendig ist und ebenfalls Platzprobleme mit sich bringt.

Die DE 101 58 961 A1 zeigt ein Rohr, das in einer geschäumten Schicht eingebettet ist und als Kabelführung dient. Ein umgebogener Randstreifen dient der Verstärkung.

Die gattungsbildende US 6,513,864 B2 zeigt ein Dachmodul mit einem Verstärkungsprofil, das in eine geschäumte Schicht eingebettet ist. Ein elektrischer Motor mit einem Gehäuse ist von außen an ein in die Schicht eingebettetes Versteifungsprofil angeflanscht.

Die US 2003/0159264 A1 zeigt einen Kabelbaum, der in einem Hohlraum zwischen einer Innenauskleidung und einem Dachpaneel angeordnet ist.

Die Erfindung schafft ein kompaktes und stabiles Fahrzeugdachmodul, das die Anbindung von Anbauten, auch im Nachrüstfall, vereinfacht und das vor allem die Integration eines Dachöffnungssystems erleichtert.

Dies wird bei einem Fahrzeugdachmodul mit den Merkmalen des Anspruchs 1 erreicht. Das beim Schäumen eingebettete und umschäumte Hohlprofil stabilisiert das Fahrzeugdachmodul, ohne das Gewicht zu erhöhen, erlaubt das Eindrehen von Schrauben zur Anbindung von Anbauten und dient vor allem als Kanal für Signalübertragungsmittel, die durch das Hohlprofil verlaufen und auch nachträglich eingezogen werden können. Diese Signalübertragungsmittel sind bei Integration eines Dachöffnungssystems die drucksteif geführten Antriebskabel. Die Erfindung sieht vor, daß nicht nur das Hohlprofil in das Dachmodul eingeschäumt ist, sondern zudem auch noch Teile des Antriebs für das Dachöffnungssystem. Insbesondere ist ein Teil des Antriebsgehäuses durch Umschäumen in die Schaumstoffschicht eingebettet, womit die Befestigung des Antriebs am Fahrzeugdachmodul wesentlich vereinfacht wird. Beispielsweise ist ein mit dem Antriebskabel kämmendes Ritzel in dem in der Schaumstoffschicht liegenden Teil des Antriebsgehäuses untergebracht. Der Teil des Antriebsgehäuses, der in die Schaumstoffschicht eingebettet ist, sollte auch geringfügig aus dieser herausragen. Damit kann nämlich ein anderer Teil des Antriebsgehäuses an diesen eingebetteten Teil angeflanscht werden.

Das Hohlprofil ist bevorzugt ein elastisches Kunststoffrohr, das vollständig vom Schaum umgeben ist, es kann aber auch ein Metallrohr sein, wenn die Priorität auf der Erhöhung der Steifigkeit des Dachmoduls liegt oder die Antriebskräfte übertragen werden sollen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein eingebautes Fahrzeugdachmodul nach der Erfindung,
- Figur 2 eine Querschnittsansicht durch ein erfindungsgemäßes Fahrzeugdachmodul, bei dem das Dachöffnungssystem weggelassen ist,
- Figur 3 eine schematische Ansicht eines Schäumwerkzeugs, in dem das erfindungsgemäße Fahrzeugdachmodul hergestellt wird,
- Figur 4 eine Querschnittsansicht durch eine zweite Ausführungsform des erfindungsgemäßen Fahrzeugmoduls, und
- Figur 5 eine Längsschnittansicht durch ein erfindungsgemäßes Fahrzeugdachmodul im Bereich des Antriebs des Deckels.

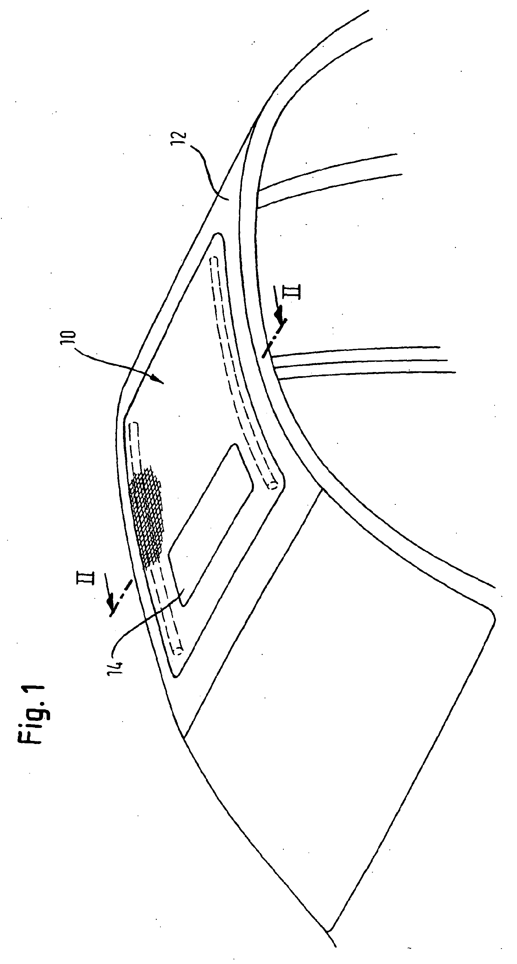

In Figur 1 ist ein mit einem Dachöffnungssystem ausgestattetes Dachmodul 10 dargestellt, das von oben auf einen Fahrzeugrahmen 12 aufgesetzt und mit ihm verbunden wird. Das Fahrzeugdachmodul ist mit einer Öffnung versehen, die durch einen ausstellbaren und verschiebbaren Deckel 14 als Teil des Dachöffnungssystems wahlweise geöffnet werden kann.

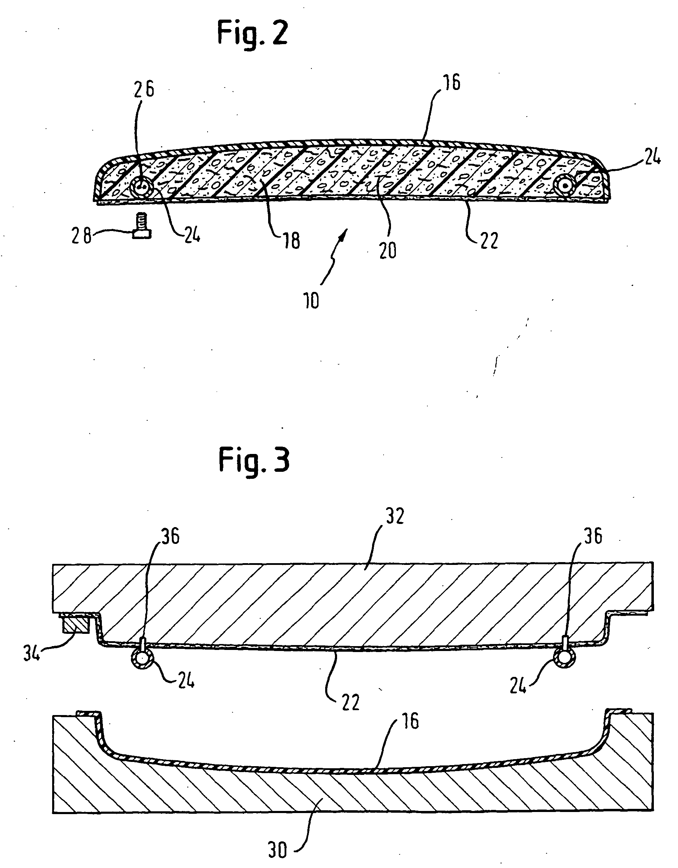

Das Fahrzeugdachmodul 10 umfaßt vorzugsweise eine thermoplastische Folie (Fig. 2), die die Außenhaut 16 des Moduls und des Fahrzeugs im Bereich des Daches bildet. Die Außenhaut 16 wird durch Tiefziehen plastisch verformt und ist vorzugsweise durchgefärbt, damit das Fahrzeugdachmodul nicht mehr lackiert werden muß und eine bereits fertige Außenfläche besitzt.

Die Außenhaut 16 ist hinterschäumt. Mit 18 ist die Schaumstoffschicht bezeichnet, die aus PUR-Material hergestellt ist und mit Glasfasern 20 verstärkt wird. Dieses Hinterschäumungsverfahren wird auch als LFI-Verfahren (Long-Fiber-Injection-Verfahren) bezeichnet.

Das PUR-Material kann die Außenhaut 16 mit einer Innenverkleidung 22 in Form einer Folie oder eines Textils, das auch beflockt sein kann, verbinden, wobei aber die Innenverkleidung 22 auch als separates Bauteil ausgeführt sein kann, insbesondere, wenn zwischen Außenhaut 16 und Innenverkleidung 22 ein Rahmen für ein Dachöffnungssystem angeordnet ist. Zu betonen ist ferner, daß sowohl die Außenhaut 16 als auch die Innenverkleidung 22 mehrschichtig ausgeführt sein können.

In die Schaumstoffschicht 18 sind seitlich des Deckels 14 zwei langgestreckte Hohlprofile in Form von Kunststoffrohren 24 vollständig eingebettet. In diesen laufen Signalübertragungsmittel 26.

Die Signalübertragungsmittel 26 sind drucksteif geführte Antriebskabel für die Betätigung des Deckels 14.

In das flexible Kunststoffrohr 24 oder Metallrohr kann von außen auch eine Schraube 28 eingedreht werden, die der Befestigung eines Anbauteils, z. B. eines Lautsprechers, eines Leuchtmittels oder einer Konsole dient. Bei der Ausführung mit einem elektrischen Dachöffnungssystem können auch die Befestigungsschrauben für den elektrischen Antrieb mit eingeschäumt sein.

In Figur 3 ist das Schäumwerkzeug dargestellt, das bei der Herstellung des erfindungsgemäßen Fahrzeugdachmoduls verwendet wird. Die tiefgezogene Außenhaut 16 wird in das Unterteil 30 des Werkzeugs eingelegt. Die Innenverkleidung 22 wird am Oberteil 32 befestigt, was mittels eines seitlichen Spannrahmens 34 erfolgen kann. Anschließend werden die Kunststoffrohre 24 über Positionsstifte 36 am Oberteil befestigt. Die Positionsstifte 36 ragen durch die Innenverkleidung 22 hindurch und können entweder z. B. temporär am Kunststoffrohr 24 befestigt sein, um in Öffnungen im Oberteil 32 zu ragen, oder sie können am Oberteil 32 permanent befestigt sein, um in Positionsöffnung im Kunststoffrohr 24 einzudringen.

Anschließend wird rückseitig auf die Außenhaut 16 flüssiges PUR-Material, in das Glasfasern 20 eingeschossen werden, aufgetragen. Das Schäumwerkzeug wird geschlossen, so daß der Kunststoff ausschäumt, Außenhaut 16 mit Innenverkleidung 22 verbindet und dabei die Kunststoffrohre 24 vollständig in den Schaum einbettet.

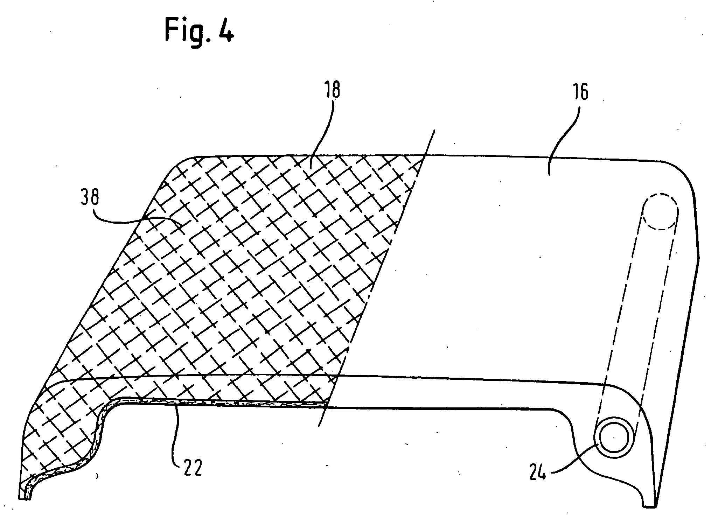

Es können natürlich hier auch weitere Teile in Schaumstoffschicht 18 eingebettet werden, z. B. Befestigungsmittel, Verstärkungsbleche oder Halterungen für Airbags oder, wie in Figur 4 gezeigt, flächige Metallverstärkungen wie Metallnetze 38 (z. B. Gitter, Steckmetall), die unabhängig vom Hohlprofil auch das Crashverhalten verbessern.

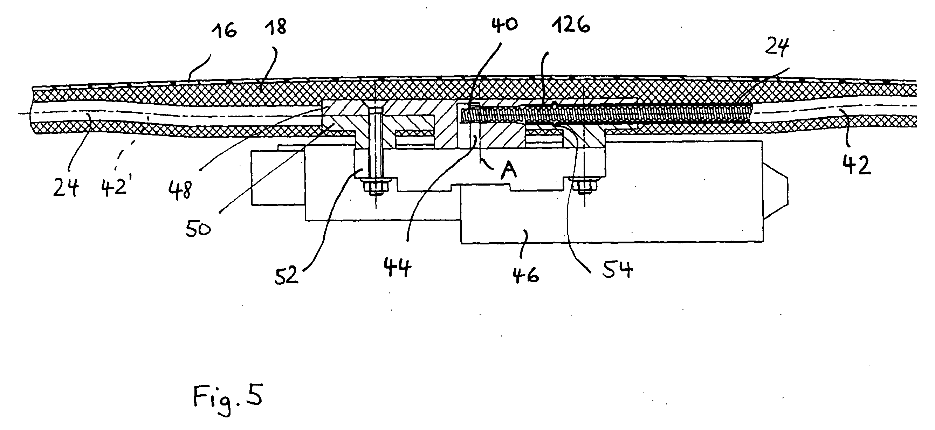

Die Ausführungsform nach Figur 5 zeigt einen Längsschnitt durch das Dachmodul im Bereich des Antriebs für den Deckel 14, wobei der Schnitt an der Linie A versetzt ist, d.h. daß rechts von der Linie A in einer anderen Ebene als links von der Linie A geschnitten wurde. Zum Antrieb des Deckels 14 sind, wie beispielsweise in der DE 195 31 514 C2, die hiermit in die vorliegende Anmeldung mit einbezogen wird, zwei abschnittsweise parallel verlaufende drucksteif geführte Antriebskabel 126 vorgesehen, die durch ein zwischen den Antriebskabeln 126 liegendes Ritzel 40 in entgegengesetzte Richtungen angetrieben werden. Da der Antrieb vorzugsweise im Bereich des vorderen Endes des Dachmoduls quer zum Fahrzeug verläuft, sind die Antriebskabel 126 in diesem Bereich in den durch die Hohlprofile 24 gebildeten Kanälen 42, 42' geführt. Das Ritzel 40 sitzt fliegend gelagert auf einer Antriebswelle 44, die mit einem Antriebsmotor 46 in Drehung versetzt wird. Das Ritzel 40 ist in einem mehrteiligen Antriebsgehäuse untergebracht, das teilweise durch Umschäumen in die Schaumstoffschicht 18 eingebettet ist. Der in die Schaumstoffschicht 18 eingebettete Teil des Antriebsgehäuses umfaßt unter anderem einen oberen Gehäusedeckel 48, der eine Kammer zur Unterbringung des Ritzels 40 und der Antriebswelle 44 aufweist, sowie einen unteren Gehäusedeckel 50. Der untere Gehäusedeckel 50 ragt teilweise aus der Schaumstoffschicht 18 heraus. Von unten werden der Antriebsmotor 46 und ein Getriebegehäuse 52 mit den Gehäusedeckeln 48 und 50 verschraubt.

Die Enden der beiden Hohlprofile 24 sind in dem oberen Gehäusedeckel 48 befestigt, indem jeweils ein nach außen ragender Ringwulst 54 der Hohlprofile 24 in eine Nut in einer zugeordneten Öffnung im Gehäusedeckel 48, in die das zugeordnete Ende eingeschoben wird, aufgenommen ist.

### Bezugszeichenliste

- 10: Modul
- 12: Dachrahmen
- 14: Deckel
- 16: Außenhaut
- 18: Schaumstoffschicht
- 20: Glasfasern
- 22: Innenverkleidung
- 24: Kunststoffrohr
- 26: Signalübertragungsmittel
- 28: Schraube
- 30: Unterteil
- 32: Oberteil
- 34: Spannrahmen
- 36: Positionsstifte
- 38: Metallnetz
- 40: Ritzel
- 42,42': Kanal
- 44: Antriebswelle
- 46: Antriebsmotor
- 48: Oberer Gehäusedeckel
- 50: Unterer Gehäusedeckel
- 52: Getriebegehäuse
- 54: Ringwulst
- 126: Antriebskabel

## Patentansprüche

1. Fahrzeugdachmodul, mit
einer Außenhaut (16),
einer durch Hinterschäumen rückseitig auf die Außenhaut (16) aufgebrachten Schaumstoffschicht (18) und
einem Dachöffnungssystem,
wobei in die Schaumstoffschicht (18) ein langgestrecktes Hohlprofil (24) eingebettet ist,
und wenigstens ein drucksteif geführtes Antriebskabel (126) zur Betätigung des Dachöffnungssystems durch einen Kanal (42, 42') in der Schaumstoffschicht (18) verläuft **dadurch gekennzeichnet,**
**daß** ein Teil eines Antriebsgehäuses (48,50) in die Schaumstoffschicht (18) durch Umschäumen eingebettet ist.

2. Fahrzeugdachmodul nach Anspruch 1, **dadurch gekennzeichnet, daß** das Hohlprofil ein Metallrohr ist.

3. Fahrzeugdachmodul nach Anspruch 1, **dadurch gekennzeichnet, daß** das Hohlprofil ein Kunststoffrohr (24) ist.

4. Fahrzeugdachmodul nach einem der vorhergehenden Ansprüche, **dadurch gekennzeichnet, daß** das Antriebskabel (126) durch das Hohlprofil verläuft.

5. Fahrzeugdachmodul nach einem der vorhergehenden Ansprüche, **dadurch gekennzeichnet, daß** die Außenhaut (16) eine durchgefärbte, tiefgezogene Kunststoffolie ist.

6. Fahrzeugdachmodul nach einem der vorhergehenden Ansprüche, **dadurch gekennzeichnet, daß** an die Innenseite der Schaumstoffschicht (18) eine Innenverkleidung (22) angrenzt.

7. Fahrzeugdachmodul nach einem der vorhergehenden Ansprüche, **dadurch gekennzeichnet, daß** ein mit dem Antriebskabel (126) kämmendes Ritzel (40) in dem in der Schaumstoffschicht (18) liegenden Teil des Antriebsgehäuses untergebracht ist.

## Claims

1. A vehicle roof module comprising
an outer skin (16),
a foamed material layer (18) applied on the rear side of the outer skin (16) by providing a foamed backing, and
a roof opening system,
an elongated hollow profile (24) being embedded in the foamed material layer (18),
and at least one drive cable (126), guided so as to be non-buckling and provided for operating the roof opening system, running through a channel (42, 42') in the foamed material layer (18), **characterized in that**
a part of a drive housing (48, 50) is embedded in the foamed material layer (18) during foaming.

2. The vehicle roof module according to claim 1, **characterized in that** the hollow profile is a metal tube.

3. The vehicle roof module according to claim 1, **characterized in that** the hollow profile is a plastic tube (24).

4. The vehicle roof module according to any of the preceding claims, **characterized in that** the drive cable (126) runs through the hollow profile.

5. The vehicle roof module according to any of the preceding claims, **characterized in that** the outer skin (16) is a solid-colored, deep-drawn plastic film.

6. The vehicle roof module according to any of the preceding claims, **characterized in that** an inner lining (22) adjoins the inner face of the foamed material layer (18).

7. The vehicle roof module according to any of the preceding claims, **characterized in that** a pinion (40) meshing with the drive cable (126) is accommodated in the part of the drive housing which is located in the foamed material layer (18).

## Revendications

1. Module de toit de véhicule, comportant
une peau extérieure (16),
une couche de mousse (18) appliquée par surmoulage par moussage sur la face postérieure de la peau extérieure (16) et
un système d'ouverture de toit,
un profil creux (24) allongé étant noyé dans la couche de mousse (18) ;
et au moins un câble d'entraînement (126), guidé de manière rigide à la pression pour actionner le système d'ouverture de toit, s'étendant à travers un canal (42, 42') dans la couche de mousse (18), **caractérisé en ce que**
une partie d'un boîtier d'entraînement (48, 50) est noyée dans la couche de mousse (18) par moussage.

2. Module de toit de véhicule selon la revendication 1, **caractérisé en ce que** le profil creux est un tube métallique.

3. Module de toit de véhicule selon la revendication 1, **caractérisé en ce que** le profil creux est un tube de matière plastique (24).

4. Module de toit de véhicule selon l'une des revendications précédentes, **caractérisé en ce que** le câble d'entraînement (126) s'étend à travers le profil creux.

5. Module de toit de véhicule selon l'une des revendications précédentes, **caractérisé en ce que** la peau extérieure (16) est une feuille de matière plastique emboutie et imprégnée de colorant.

6. Module de toit de véhicule selon l'une des revendications précédentes, **caractérisé en ce qu'**un revêtement intérieur (22) est adjacent à la face intérieure de la couche de mousse (18).

7. Module de toit de véhicule selon l'une des revendications précédentes, **caractérisé en ce qu'**un pignon (40) s'engrenant avec le câble d'entraînement (126) est logé dans la partie du boîtier d'entraînement, qui se trouve dans la couche de mousse (18).
